Europäisches Patentamt

European Patent Office

Office européen des brevets

(19)

(11) **EP 0 898 224 A2**

(12) **EUROPÄISCHE PATENTANMELDUNG**

(43) Veröffentlichungstag:
24.02.1999 Patentblatt 1999/08

(51) Int. Cl.⁶: $G06F\ 7/00$

(21) Anmeldenummer: 98114096.5

(22) Anmeldetag: 28.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 18.08.1997 US 912333

(71) Anmelder:
SIEMENS AKTIENGESELLSCHAFT
80333 München (DE)

(72) Erfinder:
• Runkler, Thomas, Dr.
81929 München (DE)
• Bezdek, James-C, Ptof.
Pensacola, FL 32530 (US)

(54) **Verfahren und Anordnung zum Entwurf von Regeln aus Trainingsdatenvektoren eines Trainingsdatensatzes nach dem Prinzip der Fuzzy Logic**

(57)     Es werden Anordnungen und Verfahren zum automatischen Entwurf von Fuzzy-Regeln aus Trainingsdatenvektoren vorgeschlagen, bei denen aus einer Menge vorgegebener Zugehörigkeitsfunktionstypen ein Zugehörigkeitsfunktionstyp ausgewählt wird und in einem iterativen Verfahren für alle Trainingsdatenvektoren und für jede Zugehörigkeitsfunktion alternierend Zugehörigkeitswerte für die Trainingsdatenvektoren und Schwerpunktwerte für die Zugehörigkeitsfunktionen ermittelt werden. Ist ein Abbruchkriterium erfüllt, so werden die zuletzt ermittelten Zugehörigkeitsfunktionen, beschrieben durch die Schwerpunktwerte, als Regeln verwendet.

FIG 1

EP 0 898 224 A2

**Beschreibung**

Die Erfindung betrifft den automatischen Entwurf von Fuzzy-Regeln aus Trainingsdatenvektoren.

Im Rahmen der sogenannten „unscharfen" Logik (Fuzzy Logic) werden technische Systeme mit Hilfe sogenannter Wenn-Dann-Regeln beschrieben. Die Zusammenhänge zwischen den Eingangsgrößen der Regeln und der Ausgangsgrößen der Regeln werden unter Verwendung von Zugehörigkeitsfunktionen definiert, die zu jedem Eingangswert und Ausgangswert einen Wert zwischen 0 und 1 liefern. Die Regeln, die Kombinationen von Zugehörigkeitsfunktionen entsprechen, werden in manchen Fällen von Experten formuliert. Diese Vorgehensweise wird als „manueller" Entwurf bezeichnet, da die Regeln von Experten, die das technische System in seinem Verhalten detailliert beschreiben können, definiert werden.

Zumeist werden jedoch die Regeln anhand von Trainingsdatenvektoren bestimmt, die zu verschiedenen Eingangswerten (Ist-Werte) die entsprechenden Ausgangswerte (Soll-Werte) enthalten. Diese Vorgehensweise wird als „automatischer" Entwurf bezeichnet.

Zum Entwurf von Regeln werden Trainingsdatenvektoren eines Trainingsdatensatzes verwendet, die das technische System beschreiben.

Die Trainingsdaten können beispielsweise über Meßgeräte, z.B. Sensoren, ermittelt werden und beschreiben das reale Verhalten des technischen Systems. Ein technisches System kann z.B. eine Waschmaschine, eine Walzstraße, eine Kommunikationseinrichtung, ein Kommunikationsnetz, etc. sein. Die Art des technischen Systems ist im Rahmen der Erfindung nicht wesentlich.

Im Rahmen der Fuzzy Logic können verschiedenste Zugehörigkeitsfunktionstypen verwendet werden. Unter einem Zugehörigkeitsfunktionstyp wird im weiteren jeweils eine Art einer Zugehörigkeitsfunktion verstanden, die durch ihre Form eindeutig beschrieben ist. Eine Übersicht über verschiedene Zugehörigkeitsfunktionstypen ist in [1] zu finden.

Bei den Verfahren zum automatischen Regelentwurf werden üblicherweise verschiedene Cluster-Algorithmen verwendet.

Unter Clustering ist eine Methode zu verstehen, durch die eine Menge $X = \{\underline{x}_1, ..., \underline{x}_n\} \subset \mathfrak{R}P$ in Teilmengen (Cluster) $c \in \{2, ..., n\text{-}1\}$ gruppiert wird, die eine Unterstruktur der Menge X repräsentieren. Mit $\underline{x}_1, ..., \underline{x}_n$ werden die Trainingsdatenvektoren des Trainingsdatensatzes, welcher zum Regelentwurf verwendet wird, bezeichnet. Der Trainingsdatensatz enthält n Trainingsdatenvektoren. Eine Partitionsmatrix $\underline{U} \in \underline{M} = [0, 1]^{cn}$ beschreibt die Aufteilung der Menge X in die einzelnen Cluster. Jedes Element $u_{ik}$, i = 1, ..., c; k = 1, ..., n, der Partitionsmatrix $\underline{U}$ repräsentiert die Zugehörigkeit des Trainingsdatenvektors $\underline{x}_k \in X$ zu dem i-ten Cluster. Das Element $u_{ik}$ wird im weiteren als Zugehörigkeitswert des k-ten Trainingsdatenvektors $\underline{x}_k$ zu dem i-ten Cluster bezeichnet.

Aus [2] ist das sogenannte Fuzzy C-Means Modell (FCM) bekannt, welches zum automatischen Regelentwurf eingesetzt wird.

FCM bildet eine Fuzzy-Partition $M_{fcn}$ definiert als:

$$\underline{M}_{FCM} = \left\{ \underline{U} \in \underline{M} \,\middle|\, \sum_{i=1}^{c} u_{ik} = 1,\ k = 1, K, n,\ \sum_{i=1}^{n} u_{ik} > 0,\ i = 1, K, c \right\}$$

$$(1)$$

Das FCM ist als folgendes Problem definiert:
Bei einem gegebenen Trainingsdatensatz X, einer beliebigen Norm $\|.\|$ auf dem Raum $\mathfrak{R}P$ und einem vorgebbaren Fuzzy Parameter $m \in (1,\infty)$, ist folgende Zielfunktion zu minimieren:

$$J_{FCM}(\underline{U}, \underline{V}; X) = \sum_{k=1}^{n} \sum_{i=1}^{c} u_{ik}^{m} \|\underline{x}_k - \underline{v}_i\|^2 \qquad (2).$$

Mit $\underline{V} = \{\underline{v}_1,..., \underline{v}_c\} \subset \mathfrak{R}P$ wird eine Menge von Zentren verwendeter Zugehörigkeitsfunktionen bezeichnet.

Bei dem ebenfalls in [2] beschriebenen FCM-Alternating-Optimization-Verfahren (FCM-AO) werden Clusterzentren mit beliebigen Vektoren $\underline{v}_i \in \mathfrak{R}^P$, i = 1 .. c, initialisiert. In einem iterativen Verfahren werden alternierend Zugehörigkeitswerte $u_{ik}$ zu den Trainingsdatenvektoren $\underline{x}_k$ und die Clusterzentren $\underline{v}_i$ abhängig von den zuvor ermittelten Zugehörigkeitswerten $u_{ik}$ ermittelt. Dieses iterative Verfahren wird beendet, wenn entweder eine maximale Anzahl von Iterationen durchgeführt wurde oder wenn die Änderung der Schwerpunktwerte zu vorangegangenen Iterationen kleiner ist als eine vorgebbare Schranke. Die Zugehörigkeitswerte $u_{ik}$ werden in jeder Iteration für alle Trainingsdatenvektoren nach folgender Vorschrift gebildet:

$$u_{ik} = \frac{1}{\sum\limits_{j=1}^{c} \left( \frac{\|\underline{x}_k - \underline{v}_i\|_A}{\|\underline{x}_k - \underline{v}_j\|_A} \right)^{\frac{2}{m-1}}} \quad , \qquad i = 1, \ldots, c \; ; \; k = 1, \ldots, n$$

$$(3).$$

Die Zentren $\underline{v}_i$ der Zugehörigkeitsfunktionen werden über eine Ermittlung von Schwerpunktwerten jeweils für eine Zugehörigkeitsfunktion nach folgender Vorschrift gebildet:

$$\underline{v}_i = \frac{\sum\limits_{k=1}^{n} u_{ik}^m \underline{x}_k}{\sum\limits_{k=1}^{n} u_{ik}^m} \; , \; i = 1, \ldots, c \qquad (4).$$

Aus [3] ist das sogenannte Possibilistic-C-Means-Modell (PCM) bekannt. Das PCM unterscheidet sich von dem FCM durch eine veränderte Zielfunktion. Der Zielfunktion $J_{FCM}$ des FCM wird ein Strafterm hinzugefügt.

Bei dem PCM wird die Zielfunktion $J_{PCM}$ nach folgender Vorschrift gebildet:

$$J_{PCM}(\underline{U}, \underline{V}; X) = \sum_{k=1}^{n} \sum_{i=1}^{c} \left( u_{ik}^m \|\underline{x}_k - \underline{v}_i\|^2 + \eta_i (1 - u_{ik})^m \right) \qquad (5).$$

Ein Zusatzfaktor $\eta_i$ wird nach folgender Vorschrift gebildet:

$$\eta_i = K \frac{\sum\limits_{k=1}^{n} u_{ik}^m \|\underline{x}_k - \underline{v}_i\|^2}{\sum\limits_{k=1}^{n} u_{ik}^m} \qquad (6).$$

Der Faktor $K \in \Re^+ \backslash \{0\}$ und wird üblicherweise als Wert 1 gewählt.

Eine weitere Möglichkeit, den Zusatzfaktor $\eta_i$ zu ermitteln, ist die folgende Vorschrift:

$$\eta_i = \frac{\sum\limits_{k=1}^{n} (u_{ik})^{\geq \alpha} \|\underline{x}_k - \underline{v}_i\|^2}{\sum\limits_{k=1}^{n} (u_{ik})^{\geq \alpha}} \qquad (7).$$

Mit einem vorgebbaren Wert $\alpha \in (0,1]$ wird ein Faktor $(u_{ik})^{\geq\alpha}$ gemäß folgender Vorschrift bestimmt:

$$\left(u_{ik}\right)^{\geq\alpha} = \begin{cases} 0, \text{ wenn } u_{ik} < \alpha \\ 1, \text{ wenn } u_{ik} \geq \alpha \end{cases} \qquad\qquad (8).$$

Auch bei PCM ist ein alternierendes Verfahren (PCM-AO) zur Minimierung der Zielfunktion aus [3] bekannt. Bei dem grundsätzlich gleich ausgestalteten Verfahren wie bei FCM-AO werden die Zugehörigkeitswerte $u_{ik}$ nach folgender Vorschrift gebildet, wobei vorausgesetzt wird, daß für den Zusatzfaktor jeweils $\eta_i > 0 \ \forall \ i$ gilt:

$$u_{ik} = \cfrac{1}{1 + \left(\cfrac{\|\underline{x}_k - \underline{v}_i\|_A}{\sqrt{\eta_i}}\right)^{\frac{2}{m-1}}}, \qquad i = 1, \ldots, c \ ; \ k = 1, \ldots, n$$

$$(9).$$

Zur Ermittlung der Zentren $\underline{v}_i$ der Zugehörigkeitsfunktionen in jeder Iteration wird folgende Vorschrift verwendet:

$$\underline{v}_i = \frac{\sum\limits_{k=1}^{n} u_{ik}^{m} \underline{x}_k}{\sum\limits_{k=1}^{n} u_{ik}^{m}} , \ i = 1, \ldots, c \qquad\qquad (4).$$

Nach Beendigung dieses iterativen Verfahrens sind sowohl bei FCM-AO als auch PCM-AO Zentren der jeweiligen Zugehörigkeitsfunktionen ermittelt. Die Zugehörigkeitsfunktionen, positioniert über den ermittelten Zentren $\underline{v}_i$ der Zugehörigkeitsfunktionen werden als Regeln des Fuzzy-Systems interpretiert.

Die Elemente der Partitionsmatrix $\underline{U}$, die sich aus FCM-AO bzw. PCM-AO ergibt, sind Werte der Zugehörigkeitsfunktionen

$u_i: X \to [0, 1], i = 1, \ldots, c$

für die Cluster in X, wobei

$u_i(\underline{x}_k) = u_{ik}, i = 1, \ldots, c; k = 1, \ldots, n.$

Im weiteren werden die Werte $\{u_i(\underline{x}_k)\}$ als Beobachtungen erweiterter Zugehörigkeitsfunktionen

$$\mu_i: \ \mathfrak{R}^p \ \to \ [0,1], \ \mu_i(\underline{x}_k) = u_i(\underline{x}_k) = u_{ik}, \ k=1,\ldots,n \qquad (10)$$

interpretiert.

Die erweiterten Zugehörigkeitsfunktionen $\mu_i$ werden für FCM-AO nach folgender Vorschrift gebildet:

$$\mu_i(\underline{x}) = \cfrac{1}{\sum\limits_{j=1}^{c} \left(\cfrac{\|\underline{x} - \underline{v}_i\|_A}{\|\underline{x} - \underline{v}_j\|_A}\right)^{\frac{2}{m-1}}} , \qquad i = 1, \ldots, c \qquad\qquad (11).$$

Für PCM-AO werden die erweiterten Zugehörigkeitsfunktionen $\mu_i$ nach folgender Vorschrift ermittelt:

$$\mu_i(\underline{x}) = \cfrac{1}{1 + \left(\cfrac{\left\|\underline{x} - \underline{v}_i\right\|_A}{\sqrt{\eta_i}}\right)^{\frac{2}{m-1}}}, \qquad i = 1, \ldots, c \qquad (12).$$

Ein erheblicher Nachteil der bekannten Verfahren ist darin zu sehen, daß die Form der Zugehörigkeitsfunktionen sowohl bei FCM bzw. FCM-AO als auch bei PCM bzw. PCM-AO fest ist. Bei FCM ergibt sich eine inkonvexe glockenförmige Funktion, bei PCM die sog. Cauchy-Funktion. Somit ist das Verfahren sowohl bei FCM-AO als auch bei PCM-AO jeweils auf einen festen Zugehörigkeitsfunktionstyp beschränkt.

Andere Formen von Zugehörigkeitsfunktionen und somit andere Zugehörigkeitsfunktionstypen können bei diesem Verfahren nur durch eine anschließende Approximation der Zugehörigkeitsfunktionen erhalten werden. Dies führt zu einer erheblichen Ungenauigkeit der ermittelten Regeln.

Der Erfindung liegt das Problem zugrunde, Verfahren und Anordnungen anzugeben, mit denen Regeln automatisch unter Verwendung eines beliebigen, frei wählbaren Zugehörigkeitsfunktionstypen ermittelt werden können.

Das Problem wird durch die Verfahren gemäß Patentanspruch 1, Patentanspruch 2, Patentanspruch 3, Patentanspruch 4, durch die Anordnungen gemäß Patentanspruch 9, Patentanspruch 10, Patentanspruch 11 sowie Patentanspruch 12 gelöst.

Bei dem Verfahren zum rechnergestützten Entwurf von Regeln aus Trainingsdatenvektoren eines Trainingsdatensatzes nach dem Prinzip der Fuzzy Logic gemäß Patentanspruch 1 wird ein Zugehörigkeitsfunktionstyp aus einer vorgegebenen Menge von Zugehörigkeitsfunktionstypen frei ausgewählt. Mehreren Zugehörigkeitsfunktionen des ausgewählten Zugehörigkeitsfunktionstyps werden Initialisierungsparameter zugeordnet und für jede Zugehörigkeitsfunktion und für alle Trainingsdatenvektoren werden iterativ folgende Schritte durchgeführt, bis ein Abbruchkriterium erfüllt ist:

- Es werden Zugehörigkeitswerte für die Trainingsdatenvektoren zu durch Zugehörigkeitsfunktionen beschriebenen Clustern ermittelt und gespeichert;
- unter Verwendung der Zugehörigkeitswerte wird ein Schwerpunktwert der Zugehörigkeitsfunktion ermittelt und gespeichert;
- es wird eine weitere Iteration durchgeführt, wobei die Zugehörigkeitsfunktionen in jeder Iteration durch den in der vorangegangenen Iteration ermittelten Schwerpunktwert beschrieben ist.

Die ermittelten Zugehörigkeitsfunktionen sind durch die ermittelten Schwerpunktwerte der letzten Iteration beschrieben. Die ermittelten Zugehörigkeitsfunktionen werden als Regeln verwendet.

Bei dem Verfahren gemäß Patentanspruch 2 werden die auf die oben beschriebene Weise ermittelten Regeln zur Steuerung einer Maschine (technisches System) verwendet. Die Maschine wird unter Verwendung der ermittelten Regeln gesteuert.

Bei dem Verfahren gemäß Patentanspruch 3 werden nicht den Zugehörigkeitsfunktionen des ausgewählten Zugehörigkeitsfunktionstyps Initialisierungsparameter zugeordnet, sondern es werden den Trainingsdatenvektoren initiale Zugehörigkeitswerte zu den einzelnen Zugehörigkeitsfunktionen zugeordnet. Die restlichen Verfahrensschritte des Verfahrens gemäß Patentanspruch 3 sind entsprechend den Verfahrensschritten des Patentanspruchs 1.

Bei dem Verfahren gemäß Patentanspruch 4 werden Regeln nach dem Verfahren gemäß Patentanspruch 3 ermittelt und zur Steuerung einer Maschine eingesetzt.

Die Anordnung gemäß Patentanspruch 10 weist eine Recheneinheit auf, die derart eingerichtet ist, daß folgende Verfahrensschritte durchgeführt werden zum Entwurf von Regeln aus Trainingsdatenvektoren eines Trainingsdatensatzes nach dem Prinzip der Fuzzy Logic:

- Es wird ein Zugehörigkeitsfunktionstyp aus einer vorgegebenen Menge von Zugehörigkeitsfunktionstypen frei ausgewählt,
- es werden mehreren Zugehörigkeitsfunktionen des ausgewählten Zugehörigkeitsfunktionstyps Initialisierungsparameter zugeordnet,
- für jede Zugehörigkeitsfunktion und für alle Trainingsdatenvektoren werden iterativ folgende Schritte durchgeführt, bis ein Abbruchkriterium erfüllt ist:

-- es werden Zugehörigkeitswerte für die Trainingsdatenvektoren zu durch Zugehörigkeitsfunktionen beschriebenen Clustern ermittelt und gespeichert,

-- unter Verwendung der Zugehörigkeitswerte wird ein Schwerpunktwert der Zugehörigkeitsfunktion ermittelt und gespeichert,

-- es wird eine weitere Iteration durchgeführt, wobei die Zugehörigkeitsfunktion in jeder Iteration durch den in der vorangegangenen Iteration ermittelten Schwerpunktwert beschrieben ist,

- die ermittelten Zugehörigkeitsfunktionen sind durch die Schwerpunktwerte der letzten Iteration beschrieben,
- die ermittelten Zugehörigkeitsfunktionen werden als Regeln verwendet.

Die Anordnung gemäß Patentanspruch 11 enthält eine Recheneinheit, die die für den Patentanspruch 10 beschriebenen Verfahrensschritte durchführt sowie eine Steuerungseinheit zur Steuerung einer Maschine unter Verwendung der ermittelten Regeln.

Die Anordnung gemäß Patentanspruch 12 weist eine Recheneinheit auf, die derart ausgestaltet ist, daß das Verfahren gemäß Patentanspruch 3 durchgeführt wird.

Die Anordnung gemäß Patentanspruch 13 weist ebenso eine Recheneinheit auf, die gemäß Patentanspruch 12 ausgestaltet ist sowie ferner eine Steuerungeinheit zur Steuerung einer Maschine unter Verwendung der ermittelten Regeln.

Durch die Verfahren und die Anordnung wird erreicht, daß beliebig vorgebbare Zugehörigkeitsfunktionstypen zum Regelentwurf eingesetzt werden können. Somit ist keine Approximation ermittelter Zugehörigkeitsfunktionen des festgelegten Typs nach dem FCM-AO-Verfahren bzw. der PCM-AO-Verfahren mehr erforderlich. Dies führt zu einem genaueren Modell des durch die Regeln beschriebenen technischen Systems.

Vorteilhafte Weiterbildungen der Erfindung ergeben sich aus den abhängigen Ansprüchen.

Um möglichst genaue Initialisierungsparameter zu erhalten ist es vorteilhaft, zu Beginn des Verfahrens die Initialisierungsparameter bzw. die initialen Zugehörigkeitswerte unter Verwendung des FCM-Verfahrens bzw. FCM-AO-Verfahrens oder auch des PCM-Verfahrens bzw. PCM-AO-Verfahrens zu bestimmen.

Die Verfahren und die Anordnungen können zur Beschreibung bzw. zur Steuerung verschiedenster technischer Systeme bzw. Maschinen eingesetzt werden, beispielsweise im Bereich von Stahlwalzmaschinen, bei Klärwerken, bei chemischen Reaktoren, etc.

Die Trainingsdatenvektoren können über Meßgeräte und/oder Sensoren ermittelt werden und im Rahmen der Erfindung verwendet werden.

In den Figuren sind Ausführungsbeispiele der Erfindung dargestellt, die im weiteren näher erläutert werden.

Es zeigen

Fig. 1         eine symbolische Darstellung des Verfahrens eines ersten Ausführungsbeispiels in Form eines Ablaufdiagramms, welches in einem Rechner durchgeführt wird;

Fig. 2         eine symbolische Darstellung des Verfahrens eines zweiten Ausführungsbeispiels in Form eines Ablaufdiagramms, welches in einem Rechner durchgeführt wird;

Fig. 3         eine Skizze eines technischen Systems, für das über ein Meßgerät Trainingsdatenvektoren ermittelt werden, anhand derer die Regeln ermittelt werden, die wiederum zur Steuerung des technischen Systems verwendet werden;

Fig. 4a bis 4i         Skizzen verschiedener Zugehörigkeitsfunktionstypen, aus denen eine Zugehörigkeitsfunktion ausgewählt werden kann.

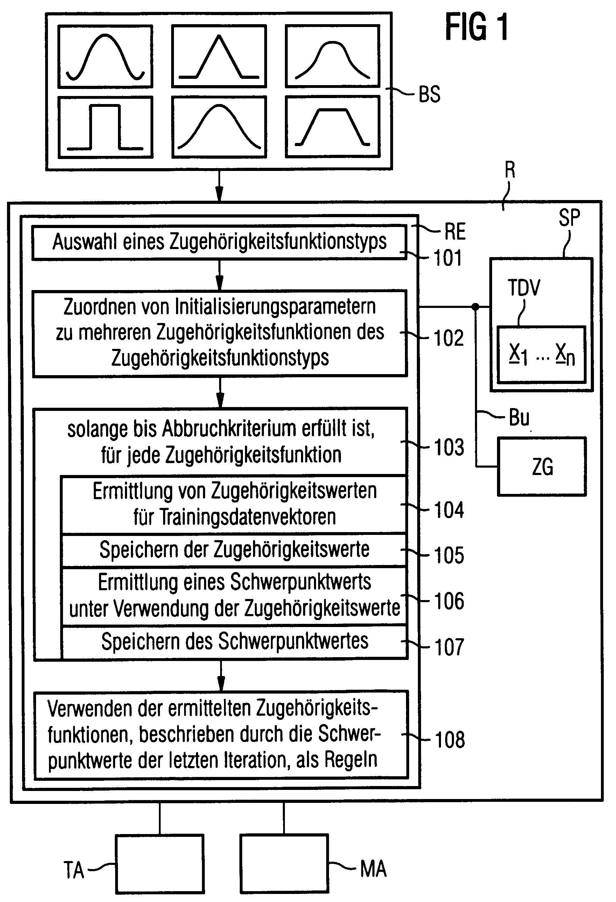

In Fig. 1 ist ein Rechner R symbolisch dargestellt. Der Rechner R weist eine Recheneinheit RE und einen Speicher SP auf, die über einen Bus BU miteinander verbunden sind. Ferner ist eine Tastatur TA und eine Maus MA vorgesehen, die mit dem Rechner R verbunden sind. Auf einem Bildschirm BS, der ebenfalls mit dem Rechner R gekoppelt ist, wird einem Benutzer eine Menge möglicher Zugehörigkeitsfunktionstypen graphisch dargestellt, die im Rahmen des automatischen Regelentwurfes verwendet werden können.

Die vorgegebene Menge möglicher Zugehörigkeitsfunktionstypen ist in dem Speicher SP gespeichert. In dem Speicher SP sind ferner Trainingsdatenvektoren $\underline{x}_k$ eines Trainingsdatensatzes TDS gespeichert, die im Rahmen des automatischen rechnergestützten Regelentwurfs berücksichtigt werden.

Der Benutzer wählt aus der Menge möglicher Zugehörigkeitsfunktionstypen den Zugehörigkeitsfunktionstyp aus, der im weiteren verwendet werden soll (Schritt 101).

Eine Übersicht über verschiedene Zugehörigkeitsfunktionstypen ist in [1] zu finden.

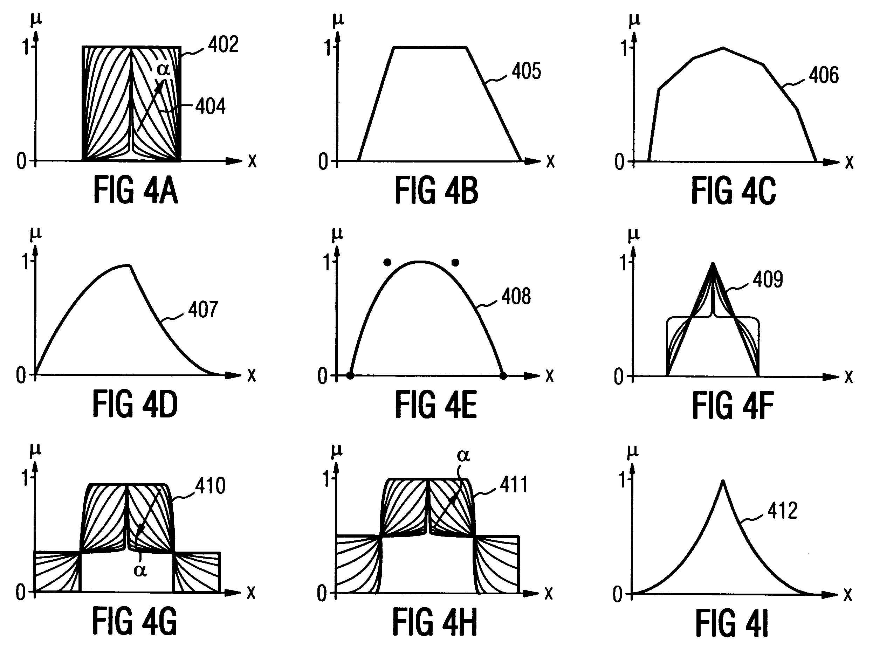

In den Fig. 4a bis 4i sind Zugehörigkeitsfunktionstypen dargestellt, die zur Ermittlung der Zugehörigkeitswerte

$u_{ik} = \mu_i(\underline{x}_k)$, i = 1, ..., c; k = 1, ..., n,

dienen können.

Die Definitionen sind gültig für jede beliebige Norm auf dem Raum $\mathfrak{R}P$. Zur einfacheren Darstellung wird die euklidische Norm im weiteren zur Beschreibung der Zugehörigkeitsfunktionen verwendet sowie der eindimensionale Fall angenommen, so daß der Vekor $\underline{x}$ eine skalare Größe x ist und auch die Zentren $\underline{v}_i$ skalare Werte $v_i$ annehmen.

Figur 4a zeigt hyperzylindrische Zugehörigkeitsfunktionstypen mit dem Zentrum $v_i \in \mathfrak{R}$ und dem Radius $r_i \in \mathfrak{R}$. Im eindimensionalen kartesischen Fall ist dies ein rechteckiger Zugehörigkeitsfunktionstyp 402. Der hyperzylindrische Zugehörigkeitsfunktionstyp wird durch folgende Vorschrift beschrieben:

$$\mu_i(x) = \begin{cases} 1 & \text{für } \|x - v_i\| \leq r_i \\ 0 & \text{sonst} \end{cases} \qquad (13).$$

Figur 4a zeigt ferner hyperkonische Zugehörigkeitsfunktionstypen die im eindimensionalen kartesischen Fall dreiecksförmigen Zugehörigkeitsfunktionstyp 404 entsprechen, wobei die Zugehörigkeitsfunktionen nach folgender Vorschrift gebildet werden:

$$\mu_i(x) = \begin{cases} 1 - \dfrac{\|x - v_i\|}{r_i} & \text{für } \|x - v_i\| \leq r_i \\ 0 \quad \text{sonst} \end{cases} \qquad (14).$$

Erweiterte hyperkonische Zugehörigkeitsfunktionstypen sind ebenso in Figur 4a dargestellt. Zugehörigkeitsfunktionen dieses Zugehörigkeitsfunktionstyps werden nach folgender Vorschrift gebildet:

$$\mu_i(x) = \begin{cases} 1 - \left(\dfrac{\|x - v_i\|}{r_i}\right)^{\alpha} & \text{für } \|x - v_i\| \leq r_i \\ 0 \quad \text{sonst} \end{cases} \qquad (15).$$

Ein trapezförmiger Zugehörigkeitsfunktionstyp 405 ist in Figur 4b dargestellt. Zugehörigkeitsfunktionen dieses Typs werden nach folgender Vorschrift gebildet:

$$\mu_i(x) = \begin{cases} 0 & \text{für } x < a_i \\ \dfrac{x - a_i}{b_i - a_i} & \text{für } a_i \leq x < b_i \\ 1 & \text{für } b_i \leq x < c_i \\ \dfrac{d_i - x}{d_i - c_i} & \text{für } c_i \leq x < d_i \\ 0 & \text{für } x \geq d_i \end{cases} \qquad (16),$$

wobei mit $a_i$ und $d_i$ Endpunkte und $b_i$ und $c_i$ Zwischenpunkte des Trapezes bezeichnet werden. Es gilt $a_i \leq b_i \leq c_i \leq d_i$.

Ein Zugehörigkeitsfunktionstyp, der stückweise lineare Zugehörigkeitsfunktionen 406 aufweist, ist in Figur 4c dargestellt.

Ein Zugehörigkeitsfunktionstyp mit stückweise polynomialen Zugehörigkeitsfunktionen 407 ist in Figur 4d dargestellt. Zugehörigkeitsfunktionen dieses Zugehörigkeitsfunktionstyps werden nach folgender Vorschrift gebildet:

$$\mu_i(x) = \sum_{k=0}^{n} w_k x^k \qquad (17),$$

mit $w_0,...,w_n$, $x \in \mathfrak{R}$, $n \in N$.

Sogenannte B-Splines 408 sind in Fig. 4e dargestellt. B-Splines enthalten weiche stückweise polynomiale Kurven. Im 2-dimensionalen Raum werden sie durch Trefferpunkte $\{(t_{1i},p_{1i}),...,(t_{ni},p_{ni})\}$ beschrieben.

Allgemein werden B-Splines nach folgender Vorschrift gebildet:

$$\mu_i(x) = \sum_{j=0}^{n} p_{ij} N_{jki}(x) \qquad (18),$$

mit

$$N_{jki}(x) = \frac{x - t_{ji}}{t_{(j+k-1)i} - t_{ij}} N_{j(k-1)i}(x) + \frac{t_{(j+k)i} - x}{t_{(j+k)i} - t_{(j+1)i}} N_{(j+1)(k-1)i}(x) \qquad (19)$$

falls $k > 1$, und

$$N_{j1i}(x) = \begin{cases} 1, & \text{wenn } t_{ij} \leq x < t_{(j+1)i} \\ 0, & \text{sonst} \end{cases} \qquad (20).$$

Ein Zugehörigkeitsfunktionstyp mit trigonometrischen Zugehörigkeitsfunktionen 409 ist in Figur 4f dargestellt. Zugehörigkeitsfunktionen dieses Typs werden nach folgenden Vorschriften gebildet:

$$\mu_i(x) = \begin{cases} \dfrac{\sin\left(2\|x - v_i\|t - t\right) + \sin t}{2\sin t} & \text{wenn } \|x - v_i\| < 1, \quad t \in \left]0, \dfrac{\pi}{2}\right] \\ 0 & \text{sonst} \end{cases} \qquad (21),$$

oder

$$\mu_i(x) = \begin{cases} \dfrac{\tan\left(2\|x - v_i\|t - t\right) + \tan t}{2\tan t} & \text{wenn } \|x - v_i\| < 1, \quad t \in \left]-\dfrac{\pi}{2}, \dfrac{\pi}{2}\right[ \\ 0 & \text{sonst} \end{cases} \qquad (22).$$

Figur 4g zeigt einen exponentielle Zugehörigkeitsfunktionstypen 410 mit Formparametern und Varianzparametern $\alpha$, $\sigma_i \in \mathfrak{R}^+ \backslash \{0\}$. Zugehörigkeitsfunktionen dieser Zugehörigkeitsfunktionstypen werden nach folgender Vorschrift gebildet:

$$\mu_i(x) = e^{-\left(\frac{\|x - v_i\|}{\sigma_i}\right)^\alpha} \qquad (23).$$

Sogenannte Cauchy-Funktionen 411 sind in Figur 4h dargestellt. Sie werden nach folgender Vorschrift gebildet

$$\mu_i(x) = \frac{1}{1 + \left(\frac{\|x + v_i\|}{\sigma_i}\right)^\alpha} \qquad (24).$$

Zugehörigkeitsfunktionen eines sogenannter paarweisen sigmoidalen Zugehörigkeitsfunktionstyps 412 (vgl. Figur 4i) werden nach folgender Vorschrift gebildet:

$$\mu_i(x) = \min\left(\frac{2}{1 + e^{\frac{x - v_i}{\sigma_{i1}}}}, \frac{2}{1 + e^{\frac{v_i - x}{\sigma_{i2}}}}\right) \qquad (25).$$

Nach Auswahl des zu verwendenden Zugehörigkeitsfunktionstyps werden für mindestens zwei Zugehörigkeitsfunktionen des Zugehörigkeitsfunktionstyps in einem zweiten Schritt 102 Initialisierungsparameter festgelegt, indem die erforderlichen Formparameter der Zugehörigkeitsfunktion sowie die Zentren der Zugehörigkeitsfunktionen initial frei vorgegeben werden. Um möglichst genaue Initialisierungsparameter zu erhalten ist es vorteilhaft, zu Beginn des Verfahrens die Initialisierungsparameter unter Verwendung des FCM-Verfahrens bzw. FCM-AO-Verfahrens oder auch des PCM-Verfahrens bzw. PCM-AO-Verfahrens zu bestimmen.

Die Festlegung kann durch den Benutzer oder auch durch einen Zufallsgenerator ZG erfolgen.

In einem iterativen Verfahren 103 wird eine Folge von Verfahrensschritten, die dem Prinzip der Alternierenden-Optimierung (AO) entsprechen, welches oben beschrieben wurde, solange durchgeführt, bis ein Abbruchkriterium erfüllt ist.

Als Abbruchkriterium der Iterationsschleife (103) wird eine maximal durchzuführende Anzahl von Iterationen und/oder eine Änderung der Zentren $v_i$ der Zugehörigkeitsfunktionen zwischen mindestens einer vorangegangenen und der aktuellen Iteration, verwendet werden und/oder eine Änderung der Zugehörigkeitswerte $u_{ik}$ zwischen mindestens einer vorangegangenen und der aktuellen Iteration.

In jeder Iteration werden folgende Verfahrensschritte in der Recheneinheit RE durchgeführt:

- Für alle Trainingsdatenvektoren $\underline{x}_k$ werden unter Verwendung der jeweiligen Vorschrift der Zugehörigkeitsfunktionen des ausgewählten Zugehörigkeitsfunktionstyps Zugehörigkeitswerte $u_{ik}$ ermittelt (Schritt 104) und gespeichert (Schritt 105).
- Unter Verwendung der in der Iteration ermittelten Zugehörigkeitswerte $u_{ik}$ werden in einem weiteren Schritt 106 Schwerpunktwerte für die Zugehörigkeitsfunktionen ermittelt und in einem weiteren Schritt 107 gespeichert.
- Die Ermittlung des Schwerpunktwerts entspricht der Ermittlung des geometrischen Zentrums der jeweiligen Zugehörigkeitsfunktion unter Berücksichtigung der Trainingsdatenvektoren $\underline{x}_k$ und der Zugehörigkeitswerte.

Aus den Schwerpunktwerten ergeben sich unmittelbar die Zentren der Zugehörigkeitsfunktionen für die jeweilige Iteration. Als Verfahren zur Ermittlung der Schwerpunktwerte zu den Zugehörigkeitsfunktionen sind dem Fachmann verschiedenste Verfahren bekannt, beispielsweise das sog. Basic-Defuzzification-Distribution-Verfahren (BADD) oder auch das Verfahren der Semi-Linar-Defuzzification (SLIDE).

Ist das Abbruchkriterium erfüllt, so ergeben sich die Zugehörigkeitsfunktionen durch die Formparameter sowie durch die Zentren der in der letzten Iteration vor Abbruch der Iterationsschleife ermittelten Zugehörigkeitsfunktionen.

Die ermittelten Zugehörigkeitsfunktionen, beschrieben durch die Schwerpunktwerte und somit durch die Zentren der Zugehörigkeitsfunktionen aus der letzten Iteration werden als die zu ermittelnden Regeln interpretiert und verwendet (Schritt 108).

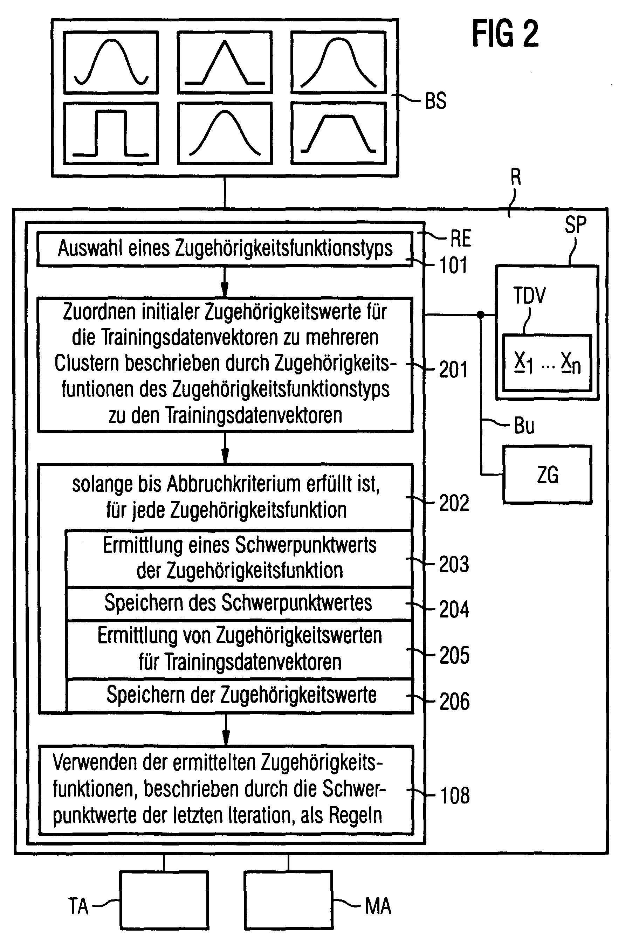

In Fig. 2 ist ein zweites Ausführungsbeispiel der Erfindung dargestellt.

Das zweite Ausführungsbeispiel unterscheidet sich nur leicht von dem ersten Ausführungsbeispiel. Lediglich der Verfahrensschritt der Initialisierung und der Aufbau der Iterationsschleife ist gegenüber dem ersten Ausführungsbeispiel unterschiedlich.

Nach Auswahl des Zugehörigkeitsfunktionstyps (Schritt 101) werden in dem zweiten Ausführungsbeispiel anstelle der Initialisierungsparameter für die Zugehörigkeitsfunktionen initiale Zugehörigkeitswerte $u_{ik}$ für die Trainingsdatenvektoren $\underline{x}_k$ zu den durch die Zugehörigkeitsfunktionen beschriebenen Clustern vorgegeben (Schritt 201). Um möglichst genaue Initialisierungsparameter zu erhalten ist es vorteilhaft, zu Beginn des Verfahrens die initialen Zugehörigkeitswerte unter Verwendung des FCM-Verfahrens bzw. FCM-AO-Verfahrens oder auch des PCM-Verfahrens bzw. PCM-AO-Verfahrens zu bestimmen.

Somit ergibt sich für den Aufbau der „neuen" Iterationsschleife (Schritt 202) folgende Struktur:

- Es werden in einem ersten Schritt 203 der jeweiligen Iteration aus den Zugehörigkeitswerten jeweils ein Schwerpunktwert der Zugehörigkeitsfunktion ermittelt und gespeichert (Schritt 204).
- In weiteren Schritten werden die Zugehörigkeitswerte für die Trainingsdatenvektoren zu der Zugehörigkeitsfunktion ermittelt (205) und gespeichert (206).

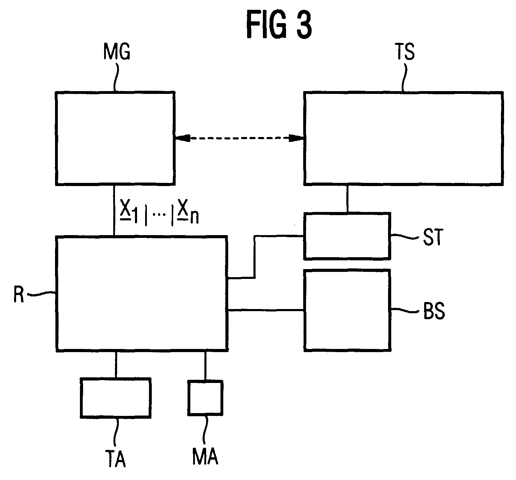

In Fig. 3 ist ein technisches System TS dargestellt, dessen Verhalten durch Trainingsdatenvektoren $\underline{x}_k$ beschrieben wird, die über ein Meßgerät MG, welches mit dem technischen System TS gekoppelt ist, ermittelt werden und in einem Speicher SP des Rechners R gespeichert werden. Eines der oben beschriebenen Verfahren wird in der Recheneinheit RE des Rechners R durchgeführt.

Nach Durchführung des Verfahrens liegt ein Satz von Regeln vor, durch den das Verhalten des technischen System TS beschrieben wird.

Über eine Steuereinheit ST wird das technische System TS unter Verwendung der Regeln und eventuell unter ständiger Erfassung neuer Meßwerte über das technische System TS gesteuert.

Im folgenden ist eine mögliche Realisierung der Erfindung in der Programmiersprache C angegeben. Das Programm kann mit dem Compiler gcc version 2.7.2.1.f.1 mit der Option -lm in ein lauffaehiges Programm uebersetzt werden.

```
/***********************************************************
*********/
/* ace.c */
/* alternating cluster estimation */
/* for compiler gcc version 2.7.2.1.f.1 option -lm */
/* by Thomas A. Runkler 4/7/97 */

/* estimates C clusters in the data set x[N][DIM] */
/* and generates a graphical output of the data and */
/* the prototypes on stdout in XFIG 3.1 format */

#include <math.h>

#define MAXSTEP 1000  /* maximum step number */
#define C 2           /* number of clusters */
#define M 2           /* fuzziness parameter */
#define N 11          /* number of data */
#define DIM 2         /* data dimension */
```

```
#define VTH 1.0e-10  /* threshold for comparison */

#define XMIN -5      /* minimum and maximum values */
#define XMAX 5       /* of the data components */

#define XOFFSET 4000 /* parameters for the */
#define YOFFSET 4000 /* graphical output */
#define XSCALE 500
#define YSCALE 500
#define VSIZE 60
#define XSIZE 30

double power(double x, double gamma){
return exp(gamma*log(x));
};

double dabs(double x){
return x>0?x:-x;
};

double rand(void){
return random()/2147483648.0;
};

double dist(double *vi, double *xk){
/* calculate the distance between prototype vi and datum xk
*/
double d=0.0;
double accu;
int l;

for (l=0; l<DIM; l++){
  accu=(xk[l]-vi[l]);
  d+=accu*accu;
};

return sqrt(d);
};

void calc_u(double (*u)[N], double (*v)[DIM], double
(*x)[DIM]){
int i,j,k,flag;
double accu;

/* user specified membership function */
/* in this example we use the FCM membership function */

for (k=0; k<N; k++){
  accu=0.0;
  flag=0;    /* flag for zero distance */
  for (j=0; (j<C)&(!flag); j++){
    if (!dist(v[j],x[k])) flag=1;
    accu+=1/power(dist(v[j],x[k]),2/(M-1));
```

```
      };
      if (flag)
        for (i=0; i<C; i++)
          u[i][k]=(i==j?1:0);
      else
        for (i=0; i<C; i++)
          u[i][k]=1/accu/power(dist(v[i],x[k]),2/(M-1));
    };

    /* to obtain triangular (conical) membership functions, */
    /* e.g., use the following instead: */

    /* for (i=0; i<C; i++) */
    /*   for (k=0; k<N; k++){ */
    /*     accu=1.0-(C+1)/(XMAX-XMIN)/sqrt(DIM)*dist(i,k); */
    /*     u[i][k]=accu>0.0?accu:0.0; */
    /*   }; */

  };

  void calc_v(double (*u)[N], double (*v)[DIM], double
  (*x)[DIM]){
  int i,k,l;
  double accu,nom,den;

  /* user specified prototype calculation */
  /* in this example we use the FCM method, i.e. */
  /* BADD defuzzification with gamma=m */

  for (i=0; i<C; i++)
    for (l=0; l<DIM; l++){
      nom=0;
      den=0;
      for (k=0; k<N; k++){
        accu=power(u[i][k],M);
        nom+=accu*x[k][l];
        den+=accu;
      };
      v[i][l]=den?nom/den:(double)XMIN+rand()*(XMAX-XMIN);
    };
  };

  void init_v(double (*v)[DIM], double (*vold)[DIM]){
  /* initialize prototypes randomly */
  /* and set old prototypes to zero */
  int i;

  for (i=0; i<C; i++){
    v[i][0]=(double)XMIN+rand()*(XMAX-XMIN);
    v[i][1]=(double)XMIN+rand()*(XMAX-XMIN);
    vold[i][0]=0.0;
    vold[i][1]=0.0;
  };
```

```
int limit(double (*v)[DIM], double (*vold)[DIM]){
/* return 1, if one component of v changed more than VTH, */
/* return 0, otherwise */

int i,l;
for (i=0; i<C; i++)
   for (l=0; l<DIM; l++)
     if (dabs(v[i][l]-vold[i][l])>VTH){
       return 1;
     };
return 0;
};

void vold_update(double (*v)[DIM], double (*vold)[DIM]){
/* copy v into vold */

int i,l;
for (i=0; i<C; i++)
   for (l=0; l<DIM; l++)
     vold[i][l]=v[i][l];
};

void plot(double (*v)[DIM], double (*x)[DIM]){
/* generate graphical output of the data and */
/* the prototypes on stdout in XFIG 3.1 format */
int k;

printf("#FIG 3.1\nPortrait\nCenter\nInches\nl200 2\n");

/* data */
for (k=0; k<N; k++)
   if
((x[k][0]>=XMIN)&&(x[k][0]<=XMAX)&&(x[k][1]>=XMIN)&&(x[k][1]<
=XMAX))
     printf("1 3 0 1 0 0 0 0 20 0.000 1 0.0000 %d %d %d %d %d
%d %d
%d\n",XOFFSET+(int)(XSCALE*x[k][0]),YOFFSET-
(int)(YSCALE*x[k][1]),XSIZE,XSIZE,X
XOFFSET+(int)(XSCALE*x[k][0]),YOFFSET-
(int)(YSCALE*x[k][1]),XOFFSET+(int)(XSCAL
LE*x[k][0])+XSIZE,YOFFSET-(int)(YSCALE*x[k][1])+XSIZE);

/* prototypes */
for (k=0; k<C; k++)

   if
((v[k][0]>=XMIN)&&(v[k][0]<=XMAX)&&(v[k][1]>=XMIN)&&(v[k][1]<
=XMAX))
     printf("1 3 0 1 0 0 0 0 20 0.000 1 0.0000 %d %d %d %d %d
%d %d
```

```
%d\n",XOFFSET+(int)(XSCALE*v[k][0]),YOFFSET-
(int)(YSCALE*v[k][1]),VSIZE,VSIZE,X
XOFFSET+(int)(XSCALE*v[k][0]),YOFFSET-
(int)(YSCALE*v[k][1]),XOFFSET+(int)(XSCAL
LE*v[k][0])+VSIZE,YOFFSET-(int)(YSCALE*v[k][1])+VSIZE);
};


int main(void){
int k,n;
double u[C][N]; /* memberships */
double x[N][DIM]; /* data */
double v[C][DIM]; /* prototypes */
double vold[C][DIM]; /* old prototypes */

/* example: butterfly dataset */
k=0;
x[k][0]=-15.0/3; x[k++][1]=0.0/3;
x[k][0]=-10.0/3; x[k++][1]=5.0/3;
x[k][0]=-10.0/3; x[k++][1]=0.0/3;
x[k][0]=-10.0/3; x[k++][1]=-5.0/3;
x[k][0]=-5.0/3; x[k++][1]=0.0/3;
x[k][0]=0.0/3; x[k++][1]=0.0/3;
x[k][0]=5.0/3; x[k++][1]=0.0/3;
x[k][0]=10.0/3; x[k++][1]=5.0/3;
x[k][0]=10.0/3; x[k++][1]=0.0/3;
x[k][0]=10.0/3; x[k++][1]=-5.0/3;
x[k][0]=15.0/3; x[k++][1]=0.0/3;

/* ACE - alternating cluster estimation */

/* initialize prototypes */
init_v(v,vold);

/* main loop: terminate v changed less than limit, */
/* maximum MAXSTEP steps */

for (n=0; (n<MAXSTEP) && (limit(v,vold)); n++){
  /* store old prototypes */
  if (n) vold_update(v,vold);
  /* calculate new partition */
  /* using user defined membership function */
  calc_u(u,v,x);
  /* calculate new prototypes */
  /* e.g. using BADD defuzzification */
  calc_v(u,v,x);
};

/* generate graphical output */
plot(v,x);

return 0;

};
```

```
/ * * * * * * * * * * * * * * * * * * * * * * * * * * * * * * * * * * * * * * * * * * * * * * * * * * *
* * * * * * * * /
```

Im Rahmen dieses Dokuments wurden folgende Veröffentlichungen zitiert:

[1] G. J. Klir und Bo Yuan, Fuzzy Sets and Fuzzy Logic - Theory and Applications, Prentice Hall P T R, New Jersey, ISBN 0-13-101171-5, S. 97 - 102, 1995

[2] J. C. Bezdek, Pattern Recognition with Fuzzy Objective Function Algorithms, Plenum Press New York, ISBN 0-306-40671-3, S. 65 - 79, 1981

[3] R. Krishnapuram, J. M. Keller, A possibilistic approach to clustering, IEEE Transactions on Fuzzy-Systems, Vol. 1, Nr. 2, S. 98-110, 1993

## Patentansprüche

1.  Verfahren zum rechnergestützten Entwurf von Regeln aus Trainingsdatenvektoren eines Trainingsdatensatzes nach dem Prinzip der Fuzzy Logic,

    - bei dem ein Zugehörigkeitsfunktionstyp aus einer vorgegebenen Menge von Zugehörigkeitsfunktionstypen frei ausgewählt wird,
    - bei dem mehreren Zugehörigkeitsfunktionen des ausgewählten Zugehörigkeitsfunktionstyps Initialisierungsparameter zugeordnet werden,
    - bei dem für jede Zugehörigkeitsfunktion und für alle Trainingsdatenvektoren iterativ folgende Schritte durchgeführt werden, bis ein Abbruchkriterium erfüllt ist:

        -- es werden Zugehörigkeitswerte für die Trainingsdatenvektoren zu durch Zugehörigkeitsfunktionen beschriebenen Clustern ermittelt und gespeichert,
        -- unter Verwendung der Zugehörigkeitswerte wird ein Schwerpunktwert der Zugehörigkeitsfunktion ermittelt und gespeichert,
        -- es wird eine weitere Iteration durchgeführt, wobei die Zugehörigkeitsfunktion in jeder Iteration durch den in der vorangegangenen Iteration ermittelten Schwerpunktwert beschrieben ist,

    - bei dem die ermittelten Zugehörigkeitsfunktionen durch die Schwerpunktwerte der letzten Iteration beschrieben sind, und
    - bei dem die ermittelten Zugehörigkeitsfunktionen als Regeln verwendet werden.

2.  Verfahren zum rechnergestützten Entwurf von Regeln zur Steuerung einer Maschine aus Trainingsdatenvektoren eines Trainingsdatensatzes nach dem Prinzip der Fuzzy Logic,

    - bei dem ein Zugehörigkeitsfunktionstyp aus einer vorgegebenen Menge von Zugehörigkeitsfunktionstypen frei ausgewählt wird,
    - bei dem mehreren Zugehörigkeitsfunktionen des ausgewählten Zugehörigkeitsfunktionstyps Initialisierungsparameter zugeordnet werden,
    - bei dem für jede Zugehörigkeitsfunktion und für alle Trainingsdatenvektoren iterativ folgende Schritte durchgeführt werden, bis ein Abbruchkriterium erfüllt ist:

        -- es werden Zugehörigkeitswerte für die Trainingsdatenvektoren zu durch Zugehörigkeitsfunktionen beschriebenen Clustern ermittelt und gespeichert,
        -- unter Verwendung der Zugehörigkeitswerte wird ein Schwerpunktwert der Zugehörigkeitsfunktion ermittelt und gespeichert,
        -- es wird eine weitere Iteration durchgeführt, wobei die Zugehörigkeitsfunktion in jeder Iteration durch den in der vorangegangenen Iteration ermittelten Schwerpunktwert beschrieben ist,

    - bei dem die ermittelten Zugehörigkeitsfunktionen durch die Schwerpunktwerte der letzten Iteration beschrieben sind,
    - bei dem die ermittelten Zugehörigkeitsfunktionen als Regeln verwendet werden, und bei dem die Regeln zur Steuerung einer Maschine verwendet werden.

3.  Verfahren zum rechnergestützten Entwurf von Regeln aus Trainingsdatenvektoren eines Trainingsdatensatzes nach dem Prinzip der Fuzzy Logic

    -   bei dem ein Zugehörigkeitsfunktionstyp aus einer vorgegebenen Menge von Zugehörigkeitsfunktionstypen frei ausgewählt wird,
    -   bei dem initiale Zugehörigkeitswerte für die Trainingsdatenvektoren zu durch Zugehörigkeitsfunktionen beschriebenen Clustern den Trainingsdatenvektoren zugeordnet werden,
    -   bei dem für jede Zugehörigkeitsfunktion und für alle Trainingsdatenvektoren iterativ folgende Schritte durchgeführt werden, bis ein Abbruchkriterium erfüllt ist:

        -- es wird ein Schwerpunktwert der Zugehörigkeitsfunktion ermittelt und gespeichert,
        -- es werden Zugehörigkeitswerte für die Trainingsdatenvektoren zu den Clustern ermittelt und gespeichert,
        -- es wird eine weitere Iteration durchgeführt, wobei die Zugehörigkeitsfunktion in jeder Iteration durch den in der vorangegangenen Iteration ermittelten Schwerpunktwert beschrieben ist,

    -   bei dem die ermittelten Zugehörigkeitsfunktionen durch die Schwerpunktwerte der letzten Iteration beschrieben sind, und
    -   bei dem die ermittelten Zugehörigkeitsfunktionen als Regeln verwendet werden.

4.  Verfahren zum rechnergestützten Entwurf von Regeln zur Steuerung einer Maschine aus Trainingsdatenvektoren eines Trainingsdatensatzes nach dem Prinzip der Fuzzy Logic,

    -   bei dem ein Zugehörigkeitsfunktionstyp aus einer vorgegebenen Menge von Zugehörigkeitsfunktionstypen frei ausgewählt wird,
    -   bei dem initiale Zugehörigkeitswerte für die Trainingsdatenvektoren zu durch Zugehörigkeitsfunktionen beschriebene Cluster den Trainingsdatenvektoren zugeordnet werden,
    -   bei dem für jede Zugehörigkeitsfunktion und für alle Trainingsdatenvektoren iterativ folgende Schritte durchgeführt werden, bis ein Abbruchkriterium erfüllt ist:

        -- es wird ein Schwerpunktwert der Zugehörigkeitsfunktion ermittelt und gespeichert,
        -- es werden Zugehörigkeitswerte für die Trainingsdatenvektoren zu den Clustern ermittelt und gespeichert,
        -- es wird eine weitere Iteration durchgeführt, wobei die Zugehörigkeitsfunktion in jeder Iteration durch den in der vorangegangenen Iteration ermittelten Schwerpunktwert beschrieben ist,

    -   bei dem die ermittelten Zugehörigkeitsfunktionen durch die Schwerpunktwerte der letzten Iteration beschrieben sind,
    -   bei dem die ermittelten Zugehörigkeitsfunktionen als Regeln verwendet werden,

    und bei dem die Regeln zur Steuerung einer Maschine verwendet werden.

5.  Verfahren nach einem der Ansprüche 1 bis 4,
    bei dem als Abbruchkriterium eine vorgebbare Anzahl Iterationen verwendet wird.

6.  Verfahren nach einem der Ansprüche 1 bis 5,
    bei dem als Abbruchkriterium eine Änderung des Schwerpunktwerts in vorangegangenen Iterationen verwendet wird.

7.  Verfahren nach einem der Ansprüche 1 bis 6,
    bei dem als Abbruchkriterium eine Änderung der Zugehörigkeitswerte in vorangegangenen Iterationen verwendet wird.

8.  Verfahren nach einem der Ansprüche 1 bis 7,
    bei dem mindestens ein Teil der Initialisierungsparameter nach dem Fuzzy-C-Means-Verfahren und/oder nach dem Possibilistic-C-means-Verfahren bestimmt wird.

9.  Verfahren nach einem der Ansprüche 1 bis 8,

bei dem die Menge von Zugehörigkeitsfunktionstypen zu Beginn des Verfahrens zur Auswahl dargestellt wird.

**10.** Anordnung zum Entwurf von Regeln aus Trainingsdatenvektoren eines Trainingsdatensatzes nach dem Prinzip der Fuzzy Logic,
mit einer Recheneinheit, die derart eingerichtet ist, daß

- ein Zugehörigkeitsfunktionstyp aus einer vorgegebenen Menge von Zugehörigkeitsfunktionstypen frei ausgewählt wird,
- mehreren Zugehörigkeitsfunktionen des ausgewählten Zugehörigkeitsfunktionstyps Initialisierungsparameter zugeordnet werden,
- für jede Zugehörigkeitsfunktion und für alle Trainingsdatenvektoren iterativ folgende Schritte durchgeführt werden, bis ein Abbruchkriterium erfüllt ist:

  -- es werden Zugehörigkeitswerte für die Trainingsdatenvektoren zu durch Zugehörigkeitsfunktionen beschriebenen Clustern ermittelt und gespeichert,
  -- unter Verwendung der Zugehörigkeitswerte wird ein Schwerpunktwert der Zugehörigkeitsfunktion ermittelt und gespeichert,
  -- es wird eine weitere Iteration durchgeführt, wobei die Zugehörigkeitsfunktion in jeder Iteration durch den in der vorangegangenen Iteration ermittelten Schwerpunktwert beschrieben ist,

- die ermittelten Zugehörigkeitsfunktionen durch die Schwerpunktwerte der letzten Iteration beschrieben sind, und
- die ermittelten Zugehörigkeitsfunktionen als Regeln verwendet werden.

**11.** Anordnung zum Entwurf von Regeln zur Steuerung einer Maschine aus Trainingsdatenvektoren eines Trainingsdatensatzes nach dem Prinzip der Fuzzy Logic,
mit einer Recheneinheit, die derart eingerichtet ist, daß

- ein Zugehörigkeitsfunktionstyp aus einer vorgegebenen Menge von Zugehörigkeitsfunktionstypen frei ausgewählt wird,
- mehreren Zugehörigkeitsfunktionen des ausgewählten Zugehörigkeitsfunktionstyps Initialisierungsparameter zugeordnet werden,
- für jede Zugehörigkeitsfunktion und für alle Trainingsdatenvektoren iterativ folgende Schritte durchgeführt werden, bis ein Abbruchkriterium erfüllt ist:

  -- es werden Zugehörigkeitswerte für die Trainingsdatenvektoren zu durch Zugehörigkeitsfunktionen beschriebene Cluster ermittelt und gespeichert,
  -- unter Verwendung der Zugehörigkeitswerte wird ein Schwerpunktwert der Zugehörigkeitsfunktion ermittelt und gespeichert,
  -- es wird eine weitere Iteration durchgeführt, wobei die Zugehörigkeitsfunktion in jeder Iteration durch den in der vorangegangenen Iteration ermittelten Schwerpunktwert beschrieben ist,

- die ermittelten Zugehörigkeitsfunktionen durch die Schwerpunktwerte der letzten Iteration beschrieben sind, und
- die ermittelten Zugehörigkeitsfunktionen als Regeln verwendet werden,

und mit einer Steuereinheit zur Steuerung der Maschine unter Verwendung der ermittelten Regeln.

**12.** Anordnung zum Entwurf von Regeln aus Trainingsdatenvektoren eines Trainingsdatensatzes nach dem Prinzip der Fuzzy Logic,
mit einer Rechnereinheit, die derart eingerichtet ist, daß

- ein Zugehörigkeitsfunktionstyp aus einer vorgegebenen Menge von Zugehörigkeitsfunktionstypen frei ausgewählt wird,
- initiale Zugehörigkeitswerte für die Trainingsdatenvektoren zu durch Zugehörigkeitsfunktionen beschriebene Cluster den Trainingsdatenvektoren zugeordnet werden,
- für jede Zugehörigkeitsfunktion und für alle Trainingsdatenvektoren iterativ folgende Schritte durchgeführt werden, bis ein Abbruchkriterium erfüllt ist:

-- es wird ein Schwerpunktwert der Zugehörigkeitsfunktion ermittelt und gespeichert,

-- es werden Zugehörigkeitswerte für die Trainingsdatenvektoren zu den Clustern ermittelt und gespeichert,

-- es wird eine weitere Iteration durchgeführt, wobei die Zugehörigkeitsfunktion in jeder Iteration durch den in der vorangegangenen Iteration ermittelten Schwerpunktwert beschrieben ist,

- die ermittelten Zugehörigkeitsfunktionen durch die Schwerpunktwerte der letzten Iteration beschrieben sind, und

- die ermittelten Zugehörigkeitsfunktionen als Regeln verwendet werden.

13. Anordnung zum Entwurf von Regeln zur Steuerung einer Maschine aus Trainingsdatenvektoren eines Trainingsdatensatzes nach dem Prinzip der Fuzzy Logic,
mit einer Recheneinheit, die derart eingerichtet ist, daß

- ein Zugehörigkeitsfunktionstyp aus einer vorgegebenen Menge von Zugehörigkeitsfunktionstypen frei ausgewählt wird,

- initiale Zugehörigkeitswerte für die Trainingsdatenvektoren zu durch Zugehörigkeitsfunktionen beschriebene Cluster den Trainingsdatenvektoren zugeordnet werden,

- für jede Zugehörigkeitsfunktion und für alle Trainingsdatenvektoren iterativ folgende Schritte durchgeführt werden, bis ein Abbruchkriterium erfüllt ist:

-- es wird ein Schwerpunktwert der Zugehörigkeitsfunktion ermittelt und gespeichert,

-- es werden Zugehörigkeitswerte für die Trainingsdatenvektoren zu den Clustern ermittelt und gespeichert,

-- es wird eine weitere Iteration durchgeführt, wobei die Zugehörigkeitsfunktion in jeder Iteration durch den in der vorangegangenen Iteration ermittelten Schwerpunktwert beschrieben ist,

- die ermittelten Zugehörigkeitsfunktionen durch die Schwerpunktwerte der letzten Iteration beschrieben sind, und

- die ermittelten Zugehörigkeitsfunktionen als Regeln verwendet werden,

und mit einer Steuereinheit zur Steuerung der Maschine unter Verwendung der ermittelten Regeln.

14. Anordnung nach einem der Ansprüche 10 bis 13,
bei der die Rechnereinheit derart eingerichtet ist, daß als Abbruchkriterium eine vorgebbare Anzahl Iterationen verwendet wird.

15. Anordnung nach einem der Ansprüche 10 bis 14,
bei der die Rechnereinheit derart eingerichtet ist, daß als Abbruchkriterium eine Änderung des Schwerpunktwerts in verschiedenen Iterationen verwendet wird.

16. Anordnung nach einem der Ansprüche 10 bis 15,
bei der die Rechnereinheit derart eingerichtet ist, daß als Abbruchkriterium eine Änderung der Zugehörigkeitswerte in vorangegangenen Iterationen verwendet wird.

17. Anordnung nach einem der Ansprüche 10 bis 16,
bei der die Rechnereinheit derart eingerichtet ist, daß mindestens ein Teil der Initialisierungsparameter nach dem Fuzzy-C-means-Verfahren und/oder nach dem Possibilistic-C-means-Verfahren bestimmt wird.

18. Anordnung nach einem der Ansprüche 10 bis 17,
bei der ein Datensichtgerät vorgesehen ist, zur Darstellung der Menge von Zugehörigkeitsfunktionstypen.

## FIG 1

BS

R

SP

TDV

$\underline{X}_1 \ldots \underline{X}_n$

Bu

ZG

| | |
|---|---|
| Auswahl eines Zugehörigkeitsfunktionstyps | RE 101 |
| Zuordnen von Initialisierungsparametern zu mehreren Zugehörigkeitsfunktionen des Zugehörigkeitsfunktionstyps | 102 |
| solange bis Abbruchkriterium erfüllt ist, für jede Zugehörigkeitsfunktion | 103 |
| Ermittlung von Zugehörigkeitswerten für Trainingsdatenvektoren | 104 |
| Speichern der Zugehörigkeitswerte | 105 |
| Ermittlung eines Schwerpunktwerts unter Verwendung der Zugehörigkeitswerte | 106 |
| Speichern des Schwerpunktwertes | 107 |
| Verwenden der ermittelten Zugehörigkeitsfunktionen, beschrieben durch die Schwerpunktwerte der letzten Iteration, als Regeln | 108 |

TA

MA

# FIG 2

BS

R

SP

**RE**

Auswahl eines Zugehörigkeitsfunktionstyps — 101

Zuordnen initialer Zugehörigkeitswerte für die Trainingsdatenvektoren zu mehreren Clustern beschrieben durch Zugehörigkeits- funtionen des Zugehörigkeitsfunktionstyps zu den Trainingsdatenvektoren — 201

TDV

$\underline{X}_1 \ldots \underline{X}_n$

Bu

solange bis Abbruchkriterium erfüllt ist, für jede Zugehörigkeitsfunktion — 202

ZG

Ermittlung eines Schwerpunktwerts der Zugehörigkeitsfunktion — 203

Speichern des Schwerpunktwertes — 204

Ermittlung von Zugehörigkeitswerten für Trainingsdatenvektoren — 205

Speichern der Zugehörigkeitswerte — 206

Verwenden der ermittelten Zugehörigkeits- funktionen, beschrieben durch die Schwer- punktwerte der letzten Iteration, als Regeln — 108

TA

MA

# FIG 3

FIG 4A

FIG 4B

FIG 4C

FIG 4D

FIG 4E

FIG 4F

FIG 4G

FIG 4H

FIG 4I